# FASCICULE DE BREVET EUROPEEN

(11) **EP 0 648 411 B1**
(45) Date de publication et mention de la délivrance du brevet: **31.07.1996**
(21) Numéro de dépôt: 94402214.4
(22) Date de dépôt: 04.10.1994
(51) Int. Cl.: A01K 13/00, A61D 11/00

(54) **Dispositif, cage et procédé de nettoyage automatique d'oiseaux**
Vorrichtung, Käfig und Verfahren zur automatischen Reinigung von Vögeln
Device, cage and method for automated cleaning of birds

(30) Priorité: 13.10.1993 FR 9312183
(43) Date de publication de la demande: 19.04.1995
(73) Titulaire: ELF AQUITAINE, F-92400 Courbevoie (FR)
(72) Inventeur: Verschuere, Bruno, F-34250 Palavas (FR); Jacques, Jean-Pierre, F-76190 Allouville-Bellefosse (FR)
(74) Mandataire: Hirsch, Marc-Roger

(56) Documents cités:
- DE-B- 1 260 853
- FR-A- 2 638 319
- US-A- 2 347 739
- US-A- 5 009 197

## Description

### DOMAINE TECHNIQUE

La présente invention concerne un procédé pour nettoyer les oiseaux souillés par divers produits et notamment des hydrocarbures, une cage pour le nettoyage des oiseaux ainsi qu'un dispositif pour la mise en oeuvre de ce procédé et de cette cage.

Elle trouve son application dans les stations ornithologiques et sur les lieux où une pollution s'est produite.

### ETAT DE LA TECHNIQUE ANTERIEURE

La méthode de nettoyage la plus pratiquée décrite dans l'article de G. BENTS publié en 1989 dans le N°15 de la revue "L'OISEAU MAGAZINE" consiste à laver manuellement les oiseaux victimes de pollutions par des hydrocarbures, avec un mélange d'eau chaude et d'agent détergent, puis à les rincer à l'eau claire.

Cette méthode délicate doit être mise en oeuvre par un ornithologue. La durée du nettoyage d'un oiseau est comprise entre 25 et 60 minutes.

Un appareil automatique pour la dépollution des oiseaux est décrit dans le brevet d'invention FR 2638319.

Cet appareil est constitué de deux bacs disposés à des niveaux différents, le bac supérieur étant pourvu de moyens d'émission de jets d'eau fixes, respectivement orientés en partie supérieure, inclinés vers le bas, en partie médiane, latéralement, et en partie basse, verticalement.

Les moyens d'émission de jets d'eau sont réalisés par des serpentins perforés placés dans le bac supérieur ou par un bac supérieur à double paroi perforée à l'intérieur.

Le fond du bac supérieur est perforé pour permettre l'écoulement de l'eau vers le bac inférieur. Dans ce bac est déposée une pompe d'alimentation des jets du bac supérieur. Un couvercle ajouré est prévu pour recouvrir le bac supérieur et permettre une circulation d'air.

L'oiseau à nettoyer est placé dans le bac supérieur et soumis à l'action des jets d'eau fixes y compris sa tête.

Entre une opération de lavage et une opération de rinçage le bac inférieur est séparé manuellement du bac supérieur.

Ce dispositif présente les inconvénients suivants :
- aucune contention de l'oiseau n'est assurée, ce qui rend probable soit des mouvements désordonnés et des blessures de l'oiseau pendant le lavage, soit une tendance à se coucher ailes repliées ce qui rend le lavage sous les ailes impossible. Par ailleurs, en l'absence de système de contention, la capture de l'oiseau dans le bac après lavage est délicate et sujette à évasions et blessures. Le contrôle de la qualité du lavage est donc une tâche difficile.
- la tête de l'oiseau est comprise dans la zone de nettoyage. En cas de lavage prolongé d'un oiseau fatigué, le risque de noyade est réel.
- le recyclage de l'eau sale par la pompe entraîne une pollution des zones de plumage propres et prolonge la durée de nettoyage. Par ailleurs, l'eau propre utilisée pour le rinçage est toujours salie par les traces d'hydrocarbures présents dans le bac inférieur, sur la pompe et dans les canalisations. Or il est établi qu'un rinçage efficace nécessite la disparition de toute trace d'hydrocarbures du plumage de l'oiseau.
- le système d'injection d'eau ("trous" dans un serpentin) ou une double paroi ne peut pas produire des jets d'une puissance suffisante pour enlever des taches d'hydrocarbures.
- la température de l'eau circulante diminue très vite. Or une température élevée est nécessaire à une bonne qualité de nettoyage et au maintien de l'oiseau en bon état général.
- les changements fréquents de l'eau du bac inférieur, nécessaires en raison de la pollution de cette eau et de son refroidissement rapide vont à l'encontre d'un souci de gain de main d'oeuvre et présentent des risques de bris de la pompe et de chute de l'ensemble du système.
- la dimension du bac supérieur doit être adaptée à la taille de l'oiseau à nettoyer. Il faut donc disposer d'une batterie de bacs pour traiter des oiseaux de tailles différentes.
- Compte tenu de la médiocrité de la qualité du nettoyage obtenu, le plumage des oiseaux n'est pas imperméable, ce dispositif ne peut donc être utilisé que pour nettoyer des oiseaux de l'espèce des anatidés, des cols-verts par exemple, qui vivent temporairement dans l'eau, et à condition que les salissures résultent d'une pollution de l'eau par des hydrocarbures relativement légers tels que du fuel domestique ou du gazole. Ce dispositif ne convient pas pour des pollutions par des hydrocarbures lourds comme des fiouls ou du pétrole brut. Pour des oiseaux de l'espèce des alcidés, (tels que les guillemots et les petits pingouins), qui vivent sur l'eau en permanence, leur plumage doit être parfaitement nettoyé pour être imperméable, ce que ne permet pas d'obtenir le dispositif.

Le brevets US 5 009 197 décrit une méthode de nettoyage d'oiseaux et autres animaux souillés. Selon cette méthode, l'oiseau est plongé manuellement et successivement dans différents bacs contenant des liquides nettoyants agités par des jets alimentés par des pompes de recirculation.

Pour remédier aux difficultés de maintien des animaux dans les bacs, ceux-ci sont placés dans une cage grillagée, tout en restant libres de leurs mouvements à l'intérieur de ladite cage. Le nettoyage de la tête et de la partie supérieure du corps des animaux est effectué manuellement au moyen d'un jet alimenté par une pompe de liquide nettoyant.

Cette méthode ne permet pas le nettoyage des parties masquées par les ailes de l'oiseau et nécessite des opérations manuelles nombreuses et délicates. De plus, il faut disposer d'un ensemble de cages de dimensions différentes adaptées à la taille des animaux à traiter.

### EXPOSE DE L'INVENTION

La présente invention a justement pour objet de remédier à ces inconvénients et notamment de fournir un dispositif, une cage et un procédé très efficaces pour le nettoyage des oiseaux nécessitant un minimum d'interventions humaines.

La contention de l'oiseau est assurée, il a la tête hors de la zone de nettoyage, ce qui élimine les risques de blessures et de noyade.

L'utilisation de liquide de nettoyage a une température voisine de celle du corps de l'oiseau pendant toute l'opération, contribue au maintien de son bon état général.

Ce procédé et ce dispositif sont utilisables aussi bien dans des centres de soins ornithologiques que sur des sites pollués. Dans ce dernier cas, il est possible de monter des batteries de plusieurs dispositifs à bord d'un véhicule d'intervention autonome.

A cette fin, la présente invention propose un dispositif pour le nettoyage des oiseaux avec un liquide de nettoyage, comprenant une cuve avec un fond et une ouverture supérieure, des moyens de pompage dudit liquide, des moyens de projection dudit liquide alimentés par les moyens de pompage, les moyens de projection du liquide comportant au moins une rampe placée à l'intérieur de la cuve , caractérisé en ce que la/les rampeest/sont mobile, et en ce que la cuve et les moyens de projection sont agencés de telle sorte à laisser libre l'ouverture supérieure de la cuve. Selon une autre caractéristique, la présente invention comporte en outre un système d'entraînement de la rampe ou, dans le cas où le dispositif comprend plusieurs rampes, un système d'entraînement simultané des rampes , en rotation autour d'un axe vertical en en translation selon le même axe.

Selon une autre caractéristique, le dispositif de la présente invention comporte en outre des moyens d'élimination depuis le fond de la cuve, du liquide de nettoyage usagé.

La présente invention a aussi pour objet une cage de nettoyage d'oiseaux pour usage dans un dispositif selon l'une des revendications précédentes, caractérisée en ce qu'elle comporte une ouverture latérale, et en ce qu'elle est équipée d'un fond réglable en position.

L'invention a aussi pour objet un procédé de nettoyage des oiseaux mis en oeuvre par le dispositif et la cage, consistant à placer un oiseau dans la cage, puis à déposer la cage contenant l'oiseau dans la cuve de nettoyage, comprenant au moins une opération de lavage ou une opération de rinçage et consistant à soumettre l'oiseau à l'action de jets mobiles de liquide de nettoyage, dont la nature est différente selon qu'il s'agit d'une opération de lavage ou de rinçage.

Selon une autre caractéristique du procédé, le liquide de nettoyage est un mélange d'eau et d'agent nettoyant pour les opérations de lavage et de l'eau claire pour les opérations de rinçage.

Enfin, selon une autre caractéristique, les opérations de lavage et de rinçage se déroulent séquentiellement

### BREVE DESCRIPTION DES DESSINS

L'invention sera mieux comprise à l'aide de la description qui suit, d'un mode de réalisation donné à titre d'exemple et en référence aux dessins annexés dans lesquels:
- la figure 1 représente schématiquement les principaux éléments constitutifs du dispositif de nettoyage,
- la figure 2 représente schématiquement la cage de nettoyage,
- la figure 3 représente schématiquement l'ensemble du dispositif de nettoyage et la cage,
- la figure 4 est le logigramme représentatif du déroulement d'une opération de nettoyage.

### EXPOSE DETAILLE DE L'INVENTION

D'une manière générale, le dispositif et le procédé de l'invention sont utilisés pour nettoyer des oiseaux d'eaux douces ou d'eaux de mer par divers produits, par exemple des hydrocarbures tels que du pétrole brut ou des fuels lourds.

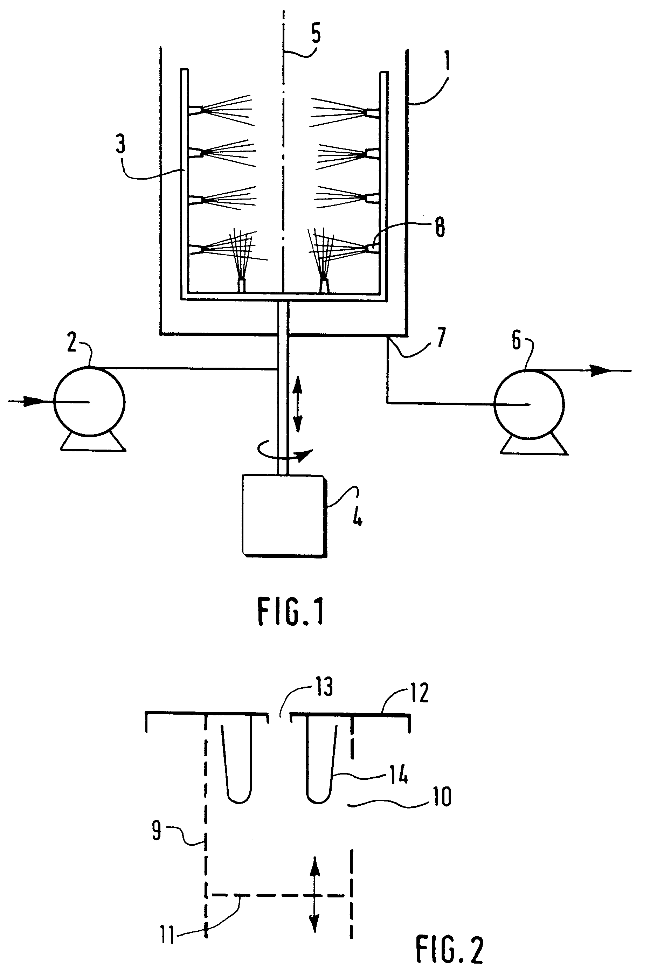

Selon le mode de réalisation représenté par la figure 1, le dispositif comporte :
- une cuve 1 de nettoyage,
- des moyens 2 de pompage du liquide de nettoyage,
- des moyens 3 de projection du liquide de nettoyage,
- un système 4 d'entraînement simultané des moyens 3 de projection de liquide de nettoyage, en rotation autour de l'axe 5 et en translation suivant le même axe,
- des moyens 6 d'élimination depuis le fond de la cuve 1 du liquide de nettoyage usagé.

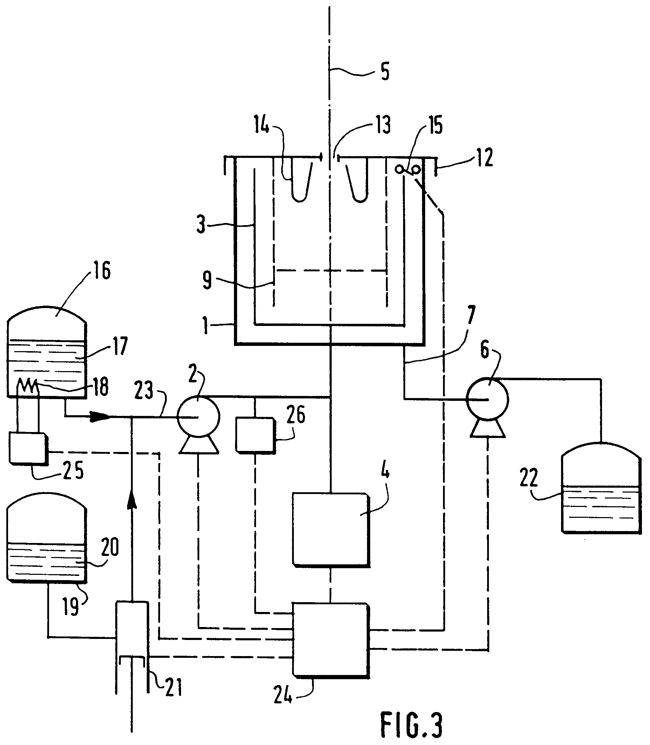

Le dispositif comporte également, représentés figure 3 :
- un détecteur 15 de présence de la cage dans la cuve 1,
- un réservoir 16 d'eau claire 17,
- un dispositif 18 de chauffage de l'eau claire,
- des moyens 25 de régulation de la température de l'eau claire,
- un réservoir 19 d'agent nettoyant 20,
- un système 21 d'injection d'agent nettoyant dans l'eau claire,
- un réservoir 22 de réception du liquide de nettoyage usagé,
- une tuyauterie 23 d'aspiration des moyens 2 de pompage,
- une tuyauterie 7 d'aspiration des moyens 6 d'élimination du liquide de nettoyage usagé,
- des moyens 24 électronique et électrique de contrôle,
- des moyens 26 d'injection et de production d'air comprimé.

Le dispositif comporte également non représentés sur les figures des capteurs de température, de niveau de liquide dans les réservoirs, de débits de liquides.

La cuve 1 de nettoyage sera avantageusement de forme cylindrique et réalisée en matériau transparent.

Les moyens de pompage 2 du liquide de nettoyage peuvent être réalisés au moyen d'un moteur électrique entraînant une pompe centrifuge dont la tuyauterie 23 d'aspiration est reliée au bac 16 de stockage d'eau claire 17, et le refoulement aux moyens 3 de projection de liquide de nettoyage.

L'eau claire 17 est portée à une température proche de celle du corps de l'oiseau au moyen du dispositif 18 de chauffage. L'agent nettoyant 20 stocké dans le bac 19 est injecté dans la tubulure d'aspiration 23 des moyens de pompage 2 au moyen du système d'injection 21 constitué par exemple par une pompe doseuse reliée au réservoir 19 de l'agent nettoyant 20. Les moyens 3 de projection de liquide de nettoyage, comportent au moins une rampe et de préférence deux, en forme de U, mobiles en rotation autour de l'axe 5 de symétrie des U, et en translation selon le même axe 5, alimentées en liquide de nettoyage par les moyens 2 de pompage. Chacune des rampes 3 est munie d'une pluralité de buse à jets plats.

On peut, par exemple, monter 10 buses réparties sur la branche horizontale et les branches verticales de chaque rampe. Pour obtenir une efficacité maximale des jets plats, les buses 8 sont positionnées pour que d'une part les plans contenant les jets, passent approximativement par l'axe 5 de rotation des rampes 3 et d'autre part que leurs axes soient dirigés vers le haut.

Les buses montées sur les branches verticales des rampes 3 sont inclinées pour former un angle de 30° à 60° par rapport à ces parties verticales, et de préférence 45°.

Les moyens 3 de projection du liquide de nettoyage sont entraînés par le système 4 d'entraînement en rotation et en translation. A titre d'exemple de réalisation, ce système comporte un moteur électrique, deux poulies, une courroie et deux engrenages pour assurer le mouvement de rotation et un ensemble à came et galet pour donner le mouvement de translation.

Le mouvement linéaire alternatif des rampes 3 de projection du liquide de nettoyage, combiné à l'orientation des jets déterminée par la position des buses 8 sur les rampes 3 assure une efficacité maximales aux jets. Au cours de la phase ascendante, les plumes sont soulevées, ce qui permet le nettoyage de leur face inférieure. Au cours de la phase descendante, l'action des jets facilite l'évacuation des impuretés. Pour éviter les passages successifs des jets aux mêmes endroits à chaque tour sur le corps de l'oiseau au cours des différentes rotations, la période du mouvement vertical est différente de celle du mouvement de rotation. Par exemple, il faut 8 tours pour qu'une buse retrouve la même position dans l'espace.

La vitesse de rotation des rampes de nettoyage a été déterminée expérimentalement, elle est comprise entre 15 et 40 tours par minute et de préférence 25 tours/mn.

Pour éviter l'effet de vissage sur l'oiseau, qui pourrait lui être préjudiciable, le sens de rotation est inversé automatiquement tous les 6 à 12 tours, par exemple tous les 8 tours.

La pression du liquide au refoulement de la pompe 2 a été déterminée expérimentalement pour obtenir une bonne efficacité des jets et une consommation d'eau comprise entre 10 et 30 litres/minute. Cette pression est comprise entre 2 et 5 bars, par exemple 4 bars, pour des moyens de projection comportant 1 rampe et 10 buses.

De plus, il est possible d'injecter de l'air comprimé dans le liquide de nettoyage grâce aux moyens 26 de production et d'injection d'air comprimé, ce qui a pour effet de faciliter le soulèvement des plumes de l'oiseau.

La température de l'eau 17 du réservoir 16 est régulée par les moyens 25 de régulation qui agissent sur le dispositif 18 de chauffage.

Cette température est fixée à une valeur proche de la température du corps de l'oiseau à nettoyer entre 30 et 50°C, par exemple 41°C pour un guillemot de Troïl. Cette valeur permet de plus d'assurer une bonne efficacité à l'agent nettoyant.

Les moyens 6 d'élimination du liquide de nettoyage sont constitués par un moteur électrique entraînant une pompe centrifuge dont la tuyauterie d'aspiration 7 est reliée au fond de la cuve 1.

Cette pompe aspire le liquide de nettoyage usagé au fond de la cuve 1 et le refoule dans le réservoir 22.

Les moyens 24 de contrôle électroniques et électriques comprenant en outre, par exemple un automate programmable et un pupitre de commande et de visualisation, sont reliés au détecteur 15 de présence de la cage dans la cuve 1, par exemple un microcontact, aux moyens 2 de pompage du liquide de nettoyage, aux moyens 6 d'élimination du liquide de nettoyage usagé, au système 21 d'injection d'agent nettoyant, aux moyens 25 de régulation de la température de l'eau claire du réservoir 16, aux moyens 26 d'injection d'air comprimé et enfin au système 4 d'entraînement des moyens de projection de liquide de nettoyage.

Quand la présence de la cage, dans la cuve 1, est détectée par le détecteur 15, les moyens de contrôle 24 électroniques et électriques agissent pour mettre en service les moyens 2 de pompage, les moyens d'élimination du liquide de nettoyage, les moyens 25 d'injection d'air, les moyens 21 d'injection de liquide de nettoyage pendant les phases de lavage.

Les moyens 24 de contrôle agissent également sur les moyens 4 d'entraînement des moyens 3 de projection de liquide de nettoyage pour donner un ordre d'inversion du sens de rotation tous les 8 tours.

Les moyens 24 de contrôle assurent le bon déroulement de la séquence des opérations de lavages et de rinçages successifs et l'arrêt des différents éléments du dispositif à la fin des opérations.

En permanence, les moyens 24 de contrôle transmettent aux moyens 25 de régulation de température la valeur de consigne de la température de l'eau 17. Grâce aux différents capteurs, l'automate est informé du déroulement des opérations et peut les arrêter en cas de défauts, tels que manque d'eau ou d'agent nettoyant, niveau haut de liquide dans la cuve 1 ou dans le réservoir 22 par exemple.

Le pupitre de commande et de visualisation donne des informations sur le déroulement des opérations et permet de modifier les paramètres de fonctionnement, par exemple la durée des différentes phases de nettoyage, la vitesse de rotation des rampes de projection, la température de l'eau.

En fin d'opération, il est possible de contrôler la qualité du nettoyage de l'oiseau grâce à la transparence de la cuve. Le plumage de l'oiseau doit être exempt de taches, les gouttes d'eau devant perler sur des plumes bien gonflées et bien aérées.

La puissance de jets plats obtenus par des buses dans les conditions indiquées est suffisante pour détacher les taches d'hydrocarbures. Elle est bien supérieure à celle de jets obtenus par des trous dans des serpentins ou dans une double enveloppe d'une cuve de nettoyage.

Grâce aux moyens de régulation de la température de l'eau, celle-ci reste constante pendant toute la durée des opérations de nettoyage.

Le dispositif proposé ne comporte aucun recyclage d'eau sale. Grâce aux moyens d'élimination du liquide de nettoyage usagé, les moyens de pompage et de projection de liquide de nettoyage ne sont jamais en contact avec les hydrocarbures. Cette caractéristique du dispositif permet en particulier un rinçage efficace nécessaire à la disparition de toute trace d'hydrocarbures.

Avec le dispositif proposé, aucune intervention de montage ou de démontage n'est nécessaire sur le dispositif au cours des opérations de lavage et de rinçage. L'ensemble des opérations est automatisé.

Le dispositif décrit ci-dessus est complété par une cage représentée figure 2, dans laquelle l'oiseau est placé. Ladite cage comporte :
- un corps grillagé 9 muni d'une ouverture latérale 10,
- un fond 11 réglable en position,
- un couvercle plein 12, en deux parties dont une mobile muni d'un orifice 13,
- des moyens 14 d'écartement des ailes de l'oiseau.

Cette cage comporte en outre, non représentés sur les figures, les éléments suivants :
- des moyens de guidage du fond,
- des moyens de blocage du fond en position,
- des moyens de fixation de la partie mobile du couvercle à la partie fixe,
- une anse liée à la partie fixe du couvercle.

Le corps grillagé 9 et le fond 11 de la cage sont réalisés au moyen d'éléments offrant une résistance minimale au passage des jets de liquide de nettoyage. Par exemple des fils d'acier inoxydables de diamètre 2 mm soudés entre eux conviennent parfaitement. Le couvercle plein 12 de la cage peut être réalisé en tôle.

Les moyens 14 d'écartement des ailes sont réalisés par exemple par des crochets articulés fixés à la moitié fixe du couvercle.

L'ouverture latérale 10 permet l'introduction de l'oiseau dans la cage.

Le réglage en position du fond 11 de la cage permet d'adapter la taille de celle-ci à la taille de l'oiseau à nettoyer.

Le réglage doit être tel que le pattes de l'oiseau reposent sur le fond 11 de la cage, sa tête se trouvant au-dessus du couvercle 12, son cou passant au travers de l'orifice 13. Le fond 11 est bloqué dans la position choisie au moyen des éléments de blocage.

La mise en place de l'oiseau dans la cage est facilitée par le fait que le couvercle 12 comporte une partie mobile et grâce aux crochets articulés 14. Quand l'oiseau est positionné, la moitié mobile du couvercle est mise en place et verrouillée à la partie fixe à l'aide des moyens de fixation.

La cage proposée est utilisable pour nettoyer des oiseaux de tailles différentes grâce à son fond réglable. De plus, les crochets articulés dans lesquels sont placées les ailes de l'oiseau, assurent la contention de celui-ci, ailes ouvertes, ce qui évite les mouvements désordonnés, mettent en évidence toute la surface corporelle et permettent un contrôle aisé de la qualité du nettoyage.

La tête de l'oiseau est maintenue hors de la zone de nettoyage automatique, ce qui élimine les risques de noyade en cas de lavage prolongé d'un oiseau fatigué.

De plus, l'oiseau étant immobilisé, il est possible de procéder, si nécessaire, à un lavage manuel de la tête pendant le opérations de nettoyage automatique.

Comme on peut le constater, le dispositif et la cage, objets de l'invention, conviennent bien pour le nettoyage de oiseaux dans des centres de soins spécialisés ou sur des sites pollués.

Pour intervenir sur ces sites pollués, on peut avantageusement monter plusieurs dispositifs et cages sur un véhicule d'intervention autonome et ainsi traiter un grand nombre d'oiseaux.

Dans les deux cas, il est possible de disposer de plusieurs cages pour mettre en place des oiseaux souillés pendant des nettoyages automatiques en cours.

La présente invention propose également un procédé pour l'exploitation du dispositif de nettoyage décrit ci-dessus.

Selon ce procédé, un opérateur règle la position du fond de la cage en fonction de la taille de l'oiseau, puis introduit ledit oiseau dans la cage.

La partie mobile du couvercle étant enlevée, l'opérateur place le cou de l'oiseau dans la partie évidée de la moitié fixe du couvercle, qui constitue la moitié de l'orifice 13, puis positionne les ailes dans les moyens 14 d'écartement.

L'opérateur place ensuite la cage contenant l'oiseau immobilisé dans la cuve 1 de nettoyage, où il est soumis automatiquement à l'action des jets mobiles de liquide de nettoyage. La nature du liquide de nettoyage est différente selon qu'il s'agit d'une opération de lavage ayant pour objet l'élimination des salissures ou d'une opération de rinçage destinée à éliminer les restes de liquide de nettoyage et les dernières traces de salissures après une opération de lavage.

Selon une autre caractéristique du procédé, le liquide de nettoyage est un mélange d'eau et d'agent nettoyant dans la proportion de 1 à 5 % et de préférence de 3 % pour les opérations de lavage et d'eau claire pour les opérations de rinçage.

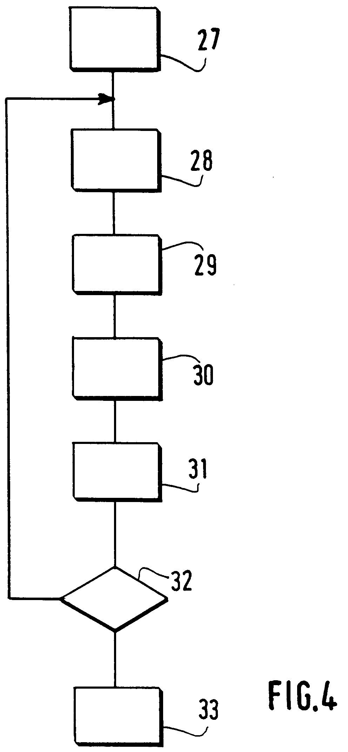

Selon une autre caractéristique, l'invention propose un procédé séquentiel de nettoyage des oiseaux. A titre d'exemple, on peut décrire la séquence représentée sur la figure 4 qui a donné de bons résultats.

Cette séquence comporte :
- une phase 27 de mise en place de l'oiseau dans la cage, et de la cage contenant l'oiseau dans la cuve de nettoyage,
- une phase 28 de lavage d'une durée de 40 secondes,
- une phase 29 de rinçage d'une durée de 40 secondes,
- une phase 30 de lavage d'une durée de 40 secondes,
- une phase 31 de rinçage final d'une durée de 80 secondes,
- une phase 32 de contrôle visuel de la qualité du nettoyage. Pour un oiseau très sale, l'opérateur a la possibilité de lancer une deuxième fois les phases 28 à 31. Si le lavage est correct, la phase suivante est exécutée.
- une phase 33 d'arrêt automatique du dispositif et de sortie manuelle de la cage de la cuve. L'oiseau est ensuite libéré.

Les valeurs des durées des différentes opérations et leur enchaînement sont données à titre d'exemple, elles peuvent être adaptées à l'importance et à la nature de salissures de l'oiseau.

Dans l'exemple décrit, la durée de nettoyage d'un oiseau est d'environ 4 minutes.

Les opérations manuelles étant limitées à la mise en place et au retrait de l'oiseau, un seul opérateur peut superviser le nettoyage simultané de plusieurs oiseaux, par exemple à bord d'un véhicule sur lequel sont montés plusieurs dispositifs.

## Revendications

1. Dispositif pour le nettoyage des oiseaux avec un liquide de nettoyage, comprenant une cuve (1)avec un fond et une ouverture supérieure, des moyens de pompage (2) dudit liquide, des moyens (3) de projection dudit liquide alimentés par les moyens (2) de pompage, les moyens (3) de projection du liquide comportant au moins une rampe (3) placée à l'intérieur de la cuve (1), caractérisé en ce que la/les rampe(s) est/sont mobile(s), et en ce que la cuve et les moyens de projection sont agencés de telle sorte à laisser libre l'ouverture supérieure de la cuve.

2. Dispositif selon les revendication 1 caractérisé en ce qu'il comporte en outre un système (4) d'entraînement de la rampe (3) ou, dans le cas où le dispositif comprend plusieurs rampes, un système (4) d'entraînement simultané des rampes (3), en rotation autour d'un axe vertical (5) en en translation selon le même axe.

3. Dispositif selon les revendications 1 ou 2 caractérisé en ce qu'il comporte en outre des moyens d'élimination depuis le fond de la cuve, du liquide de nettoyage usagé.

4. Gage de nettoyage d'oiseaux pour usage dans un dispositif selon l'une des revendications précédentes, caractérisée en ce qu'elle comporte une ouverture latérale (10), et en ce qu'elle est équipée d'un fond (11) réglable en position.

5. Cage selon la revendication 4 caractérisé en ce qu'elle comporte un couvercle (12) plein en deux parties, muni d'un orifice (13).

6. Cage selon les revendications 4 ou 5 caractérisés en ce qu'elle comporte des moyens (14) d'écartement des ailes.

7. Procédé de nettoyage des oiseaux consistant à placer un oiseau dans une cage, puis a déposer la cage contenant l'oiseau dans une cuve de nettoyage, caractérisé en ce qu'il comprend au moins une opération de lavage ou une opération de rinçage, et en ce que l'oiseau est soumis dans ladite cage à l'action de jets mobiles de liquide de nettoyage, dont la nature est différente selon qu'il s'agit d'une opération de lavage ou de rinçage.

## Claims

1. A device for cleaning birds with a cleaning liquid comprising a tank (1), means (2) for pumping said liquid, means (3) for projecting said liquid supplied by said pumping means (2), the means (3) for projecting said liquid comprising at least one distribution pipe (3) situated inside said tank (1), characterized in that said distribution pipe(s) is/are movable and said tank and projection means can be arranged whereby tile upper opening of said tank is left free.

2. A device according to claim 1, characterized in that it additionally comprises a system (4) for driving the distribution pipe or, where several distribution pipes are present, for simultaneously driving the distribution pipes (3) rotatively about a vertical axis (5) and longitudinally along said same axis.

3. A device according to claim 1 or claim 2, characterized in that it further comprises means for removing waste cleaning liquid from the bottom of said tank.

4. A bird cleaning cage for use in a device according to any one of the preceding claims, characterized in that it has a lateral opening (10) and is fitted with a base (11) the position of which can be adjusted.

5. A bird cleaning cage according to claim 4 characterized in that it is fitted with a two-part solid cover (12) provided with an aperture (13).

6. A cage according to claim 4 or 5 characerized in that it includes means (14) for spreading the wings of a bird.

7. A method for cleaning birds consisting in placing a bird in a cage and then placing said cage containing the bird in a cleaning tank, characterized in that it includes at least one cleaning operation or one rinsing operation, said bird being subjected within said cage, to the action of moveable cleaning liquid jets, the nature of said cleaning liquid varying depending on whether said operation is a cleaning or a rinsing operation.

## Patentansprüche

1. Vorrichtung zum Reinigen von Vögeln mit einer Reinigungsflüssigkeit, wobei die Vorrichtung einen Behälter (1) mit einem Boden und einer oberen Öffnung, Pumpmittel (2) für die Flüssigkeit und Mittel zum Verspritzen (3) der durch die Pumpmittel (2) zugeführten Flüssigkeit aufweist, und wobei die Flüssigkeits-Verspritzmittel (3) mindestens eine Rampe (3) aufweisen, die innerhalb des Behälters (1) angeordnet ist,
dadurch gekennzeichnet, daß
die Rampe/Rampen beweglich ist/sind und, daß
der Behälter und die Verspritzmittel so eingerichtet sind, daß sie die obere Öffnung des Behälters freilassen.

2. Vorrichtung gemäß Anspruch 1, dadurch gekennzeichnet, daß sie außerdem ein Antriebssystem (4) für die Rampe (3) zur Rotation um eine senkrechte Achse (5) und zur Translation entlang derselben Achse aufweist oder im Falle, daß die Vorrichtung mehrere Rampen aufweist, ein simultan arbeitendes Antriebssystem für die Rampen (3).

3. Vorrichtung gemäß einem der Ansprüche 1 und 2, dadurch gekennzeichnet, daß sie außerdem Mittel zur Entsorgung der benutzten Reinungsflüssigkeit am Boden des Behälters aufweist.

4. Vogelreinigungskäfig zur Verwendung in einer Vorrichtung gemäß einem der vorstehenden Ansprüche, dadurch gekennzeichnet, daß er eine seitliche Öffnung (10) aufweist und daß er mit einem positionsverstellbaren Boden ausgerüstet ist.

5. Käfig gemäß Anspruch 4, dadurch gekennzeichnet, daß er einen zweiteiligen Volldeckel aufweist, der mit einer Öffnung ausgestattet ist.

6. Käfig gemäß einem der Ansprüche 4 und 5, dadurch gekennzeichnet, daß er Mittel zum Ausstrecken (14) der Flügel aufweist.

7. Verfahren zum Reinigen von Vögeln durch Plazieren eines Vogels in einem Käfig und späteres Einsetzen des den Vogel enthaltenen Käfigs in einen Reinigungsbehälter, dadurch gekennzeichnet, daß es mindestens einen Reinigungsvorgang oder Spülvorgang umfaßt und daß der Vogel in dem Käfig der Einwirkung von beweglichen Strahlen von Reinigungsflüssigkeit ausgesetzt wird, wobei die Natur der Reinigungsflüssigkeit unterschiedlich ist, je nachdem, ob es sich um einen Wasch- oder einen Spülvorgang handelt.
